# FASCICULE DE BREVET EUROPEEN

(11) **EP 1 489 351 B1**
(45) Date de publication et mention de la délivrance du brevet: **07.05.2008**
(21) Numéro de dépôt: 04291505.8
(22) Date de dépôt: 15.06.2004
(51) Int. Cl.: F21V 5/04, F21V 14/00

(54) **Projecteur de véhicule automobile permettant d'assurer au moins deux fonctions**
Fahrzeugscheinwerfer mit mindestens zwei Funktionen
Vehicle headlight with at least two functions

(30) Priorité: 16.06.2003 FR 0307242
(43) Date de publication de la demande: 22.12.2004
(73) Titulaire: VALEO VISION, 93012 Bobigny Cédex (FR)
(72) Inventeur: de Lamberterie, Antoine, 75019 Paris (FR)
(74) Mandataire: Renous Chan, Véronique

(56) Documents cités:
- DE-A- 10 101 795
- DE-A- 19 652 569
- FR-A- 2 777 064
- FR-A- 2 826 431
- FR-A- 2 830 073
- US-A- 2 668 902
- US-A- 3 759 084
- US-A- 4 949 226

## Description

L'invention est relative à un projecteur de véhicule automobile du genre de ceux qui comprennent un réflecteur prévu pour que son axe optique soit orienté sensiblement suivant l'axe longitudinal du véhicule, une source lumineuse située au voisinage d'un foyer du réflecteur, et un élément transparent de déviation optique placé devant la source et le réflecteur, l'ensemble permettant de produire un faisceau lumineux correspondant à une première fonction, le projecteur comprenant en outre une source auxiliaire écartée transversalement de l'axe optique du réflecteur et propre à assurer une deuxième fonction.

L'évolution des exigences en matière de signalisation des véhicules automobiles engendre une augmentation des types de faisceaux lumineux à produire selon les conditions de circulation. Pour éviter un nombre trop élevé de projecteurs, il est connu de faire assurer, par un même projecteur, plusieurs fonctions correspondant à divers types de faisceaux lumineux.

Parmi les exigences de signalisation, on peut citer la fonction LV (lampe ville) ainsi que la fonction DRL (« Daytime Running Lamp » ou « feu diurne » correspondant au règlement de la Communauté Européenne intitulé "ECE Regulation R87).

De telles fonctions LV ou DRL sont difficiles à implanter dans un projecteur assurant déjà une première fonction. En effet, la place dédiée à une fonction code (projecteur de croisement) ou à une fonction route est importante, et il est difficile de trouver un emplacement pour réaliser une autre fonction. On connaît des projecteurs de type code permettant d'assurer une deuxième fonction LV. Pour cela, le projecteur comporte une source lumineuse auxiliaire constituée par une lampe ville disposée dans la cavité code. Une zone du réflecteur code est ainsi dédiée à la lampe ville, ce qui baisse les performances du code. En outre, un trou est réalisé dans le réflecteur pour le logement de la lampe, ce qui altère la surface réfléchissante. La lampe ville et une partie du trou de logement sont visibles lorsque le projecteur est éteint, sans présenter d'intérêt pour le style. En outre, l'intégration d'un trou de lampe dans la cavité code pose des problèmes lors du vernissage du réflecteur.

Les difficultés exposées précédemment pour intégrer une lampe ville dans un réflecteur code deviennent encore plus importantes lorsqu'il s'agit de réaliser une fonction DRL dont la plage éclairante doit avoir une surface d'au moins 40 cm².

On connaît par ailleurs, d'après EP 1 243 846, un projecteur muni d'un élément transparent de déviation optique, placé devant la source et le réflecteur, qui permet d'assurer un étalement horizontal de la lumière sans modifier sensiblement la répartition verticale. Ce projecteur assure une seule fonction, notamment la fonction feu de croisement ou code.

La demande de brevet DE 101 01 795 décrit par ailleurs un feu de signalisation avec une source lumineuse principale et une source lumineuse auxiliaire disposée au voisinage d'un écran muni d'un profil d'entrée et de sortie permettant notamment de rediriger les rayons émis par la source auxiliaire vers l'axe optique principal.

L'invention a pour but, surtout, de fournir un projecteur de véhicule automobile qui permet de réaliser au moins deux fonctions, en particulier une deuxième fonction LV ou DRL, sans altérer le réflecteur prévu pour une première fonction, ni ses performances. Un tel projecteur doit en outre rester d'une fabrication économique.

Selon l'invention, un projecteur de véhicule automobile du genre défini précédemment est caractérisé par le fait que la source auxiliaire est disposée en avant du réflecteur, au voisinage du contour de l'élément transparent de déviation optique et est orientée vers l'axe optique du réflecteur, l'élément transparent de déviation optique assurant un redressement du faisceau de la source auxiliaire sensiblement suivant la direction de l'axe optique du réflecteur. De préférence, l'élément de déviation selon l'invention assure essentiellement un redressement des rayons lumineux provenant du réflecteur, et pas une diffusion de ceux-ci.

De préférence, l'ensemble est tel qu'un observateur regardant le projecteur éteint ne peut pratiquement pas apercevoir la source auxiliaire.
L'élément transparent de déviation optique a un effet divergent, notamment sous la forme d'une lentille moins épaisse en son centre qu'en son bord. Il peut être constitué par une lentille cylindrique à génératrices verticales, et la source auxiliaire peut être disposée sur un flanc de l'élément de déviation optique, le long de génératrices extérieures.

Plusieurs sources auxiliaires peuvent être superposées, parallèlement aux génératrices.

Chaque source auxiliaire peut être constituée par une diode électroluminescente (LED). La source auxiliaire et l'élément transparent de déviation optique sont prévus et disposés de telle sorte qu'une partie au moins du faisceau lumineux de la source auxiliaire entre latéralement dans l'élément de déviation pour subir une réflexion totale ou partielle sur la face arrière de l'élément et être renvoyé vers l'avant.

L'élément transparent de déviation optique peut présenter une face plane et une autre face concave. La face plane peut être tournée vers l'extérieur et la face concave vers l'intérieur, ou inversement.

L'élément transparent, lorsqu'il est formé par une lentille cylindrique à génératrices verticales, peut avoir un contour carré ou rectangulaire.

La section horizontale de l'élément transparent peut présenter une partie centrale essentiellement concave comprise entre deux bosses, la source auxiliaire étant située sur le flanc extérieur de l'une des bosses.

Dans le cas où l'élément transparent de déviation optique constitue une lentille divergente de distance focale relativement grande, telle qu'une fraction importante de la lumière issue de la source latérale subit une réflexion totale et est guidée à l'intérieur de la lentille, au moins un élément diffusant est avantageusement prévu dans une zone centrale de la lentille pour diffuser vers l'extérieur, notamment vers un observateur, la lumière guidée à l'intérieur. Le ou les élément(s) diffusant(s) peuvent être prévus soit en face d'entrée, soit en face de sortie, soit dans la masse de la lentille.

Un collimateur peut être associé à chaque source lumineuse auxiliaire. Ce collimateur est avantageusement intégré dans l'élément transparent de déviation optique, notamment lorsque ce dernier est réalisé en matière plastique.

En variante, l'élément transparent de déviation optique est de révolution autour d'un axe géométrique. Plusieurs sources lumineuses auxiliaires peuvent alors être disposées en couronne autour de l'élément optique et dirigées de telle sorte que le faisceau de chaque source lumineuse soit orienté radialement vers l'axe optique du réflecteur.

Le réflecteur peut être du type parabolique.

Selon une variante, le réflecteur est du type elliptique et la source lumineuse est disposée au voisinage d'un premier foyer interne du réflecteur, tandis que le deuxième foyer est situé à l'extérieur du réflecteur ; une lentille divergente est disposée entre le réflecteur et le deuxième foyer pour transformer le faisceau réfléchi issu de la première source lumineuse en un faisceau sensiblement parallèle ; la source auxiliaire est alors située derrière la lentille et est orientée de telle sorte que son faisceau lumineux soit dirigé sensiblement vers le deuxième foyer du réflecteur.

La lentille divergente peut être plane vers l'extérieur et concave vers l'intérieur.

Avantageusement, le projecteur est prévu pour assurer comme première fonction une fonction antibrouillard ou FBL (« Fixed Bending Light » ou « projecteur fixe de virage ») et, comme deuxième fonction, une fonction LV ou DRL, le projecteur ayant une surface éclairante au moins égale à celle nécessaire pour la fonction DRL.

La variante prévoyant un collimateur associé à chaque source auxiliaire est particulièrement avantageuse pour assurer une fonction DRL qui demande une intensité lumineuse supérieure à celle de la fonction LV.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig.1 est une vue schématique de face d'un projecteur selon l'invention,
Fig.2 est une coupe schématique suivant la ligne II-II de Fig.1,
Fig.3 est une coupe schématique partielle, semblable à Fig.2 d'une variante de réalisation avec collimateur,
Fig.4 montre, semblablement à Fig.3, une variante avec collimateur intégré à la lentille,
Fig.5 est une coupe schématique partielle, semblable à Fig.4, d'une variante de réalisation avec lentille divergente de grande distance focale et élément diffusant en face d'entrée,
Fig.6 montre, en coupe, la variante de Fig.5 avec un élément diffusant dans la masse de la lentille,
Fig.7 est une vue schématique de face d'une autre variante de réalisation, et
Fig.8 est une coupe horizontale, semblable à Fig.2, d'une dernière variante de réalisation.

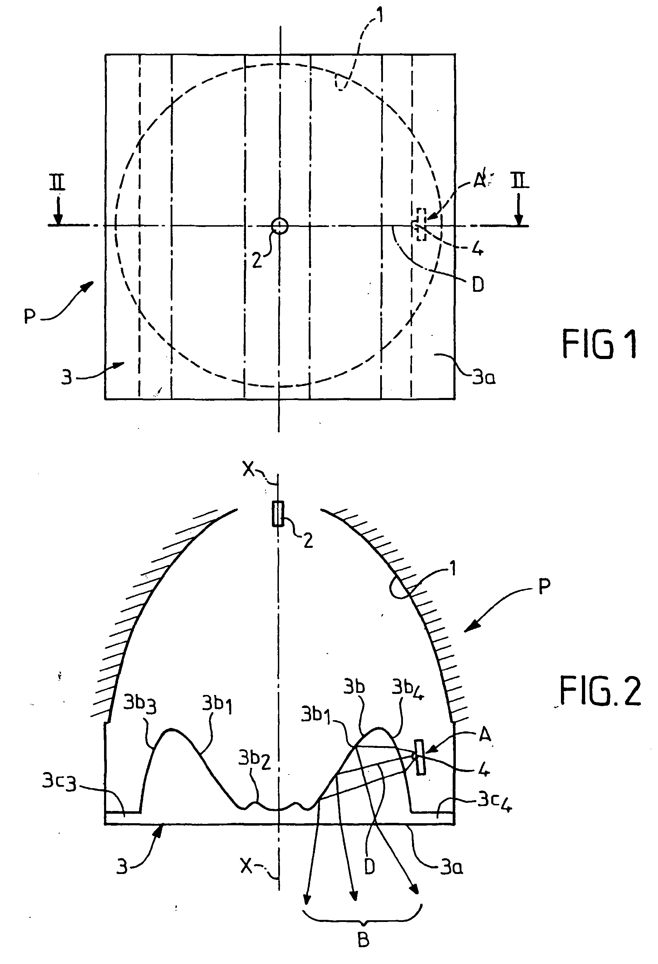

En se reportant à Figs.1 et 2 des dessins, on peut voir un projecteur P de véhicule automobile dans une représentation simplifiée ne faisant pas apparaître le boîtier à l'intérieur duquel sont disposés les éléments des Figs.1 et 2. Ce boîtier est généralement fermé à l'avant, selon le sens de propagation de la lumière, par une glace généralement lisse.

Le projecteur P comprend un réflecteur 1 selon Figs.1 et 2, prévu pour être orienté sensiblement suivant l'axe longitudinal du véhicule. Ce réflecteur présente une génératrice verticale parabolique, avec de préférence une génératrice horizontale de type elliptique. Autrement dit, l'axe optique X-X du réflecteur 1 est parallèle ou sensiblement parallèle à l'axe longitudinal du véhicule. Cependant l'axe optique X-X peut former un certain angle avec l'axe longitudinal du véhicule, notamment lorsque le projecteur P est prévu pour assurer une fonction FBL, déjà citée, qui vise à éclairer le bord intérieur d'un virage.

Une source lumineuse 2 est située au voisinage du ou d'un foyer du réflecteur 1 et peut être constituée par une lampe à incandescence ou une lampe à décharge gazeuse. Un élément transparent 3 de déviation optique est placé devant la source 2 et le miroir formant le réflecteur 1. L'élément transparent 3 peut être réalisé en verre ou en matière plastique transparente ayant un indice de réfraction proche de celui du verre et supérieur à 1.

L'élément 3 est constitué par une lentille cylindrique à génératrices verticales, par exemple du type montré par EP 1 243 846. La face avant 3a de l'élément 3 est plane dans l'exemple considéré, orthogonale à l'axe X-X. La face arrière 3b, qui est la face d'entrée de la lumière, est formée par une surface cylindrique à génératrices verticales dont la section par un plan horizontal est visible sur Fig.2. La partie centrale 3b1 de la face arrière 3b est concave dans son ensemble, tournant sa concavité vers la source 2. La partie 3b1 présente dans son fond une ondulation 3b2 avec zones convexes. Cette partie 3b1 est délimitée de chaque côté par une bosse 3b3, 3b4 tournant sa convexité vers la source 2. Le profil de la face interne 3b est déterminé en combinaison avec le profil du réflecteur 1 pour donner, à partir de la source 2 allumée, un premier type de faisceau assurant le mieux possible une première fonction, par exemple feu de croisement ou feu antibrouillard.

Vers l'extérieur, de chaque côté des bosses 3b3, 3b4, l'élément 3 présente une bande 3c3, 3c4 à section horizontale rectangulaire. Cette bande peut être opaque, car elle n'intervient pas dans la formation du faisceau lumineux.

Le contour extérieur de l'élément 3 peut être carré, comme illustré sur Fig.1 ou rectangulaire. En variante, l'élément 3 peut être découpé suivant un contour circulaire correspondant sensiblement au grand diamètre du réflecteur 1. Les angles du contour carré situés à l'extérieur du contour circulaire du réflecteur 1 n'interviennent pas dans la réalisation du faisceau lumineux.

Une source lumineuse auxiliaire A est prévue dans le projecteur P. La source A est écartée transversalement de l'axe optique X-X du réflecteur pour assurer une deuxième fonction. Des moyens de commande non représentés sont prévus pour assurer l'alimentation électrique non simultanée de la source 2 et de la source auxiliaire 4 ; quand l'une est allumée, l'autre peut être éteinte et réciproquement. On peut aussi prévoir que les deux soient allumées et/ou éteintes simultanément. Ainsi, quand on allume un code d'un véhicule, la lampe ville reste allumée. Dns le cas où la fonction optique principale est fournie par la source 2, on peut envisager qu'elle s'allume en l'absence de la fonction optique fournie par la source 4, tout particulièrement quand cette source 4 est de type diode électroluminescente : cela peut permettre avantageusement de soulager thermiquement la diode.

Selon l'invention, la source auxiliaire A est disposée au voisinage du contour extérieur de l'élément transparent 3 de déviation optique sur un flanc de cet élément, par exemple le flanc de la bosse 3b4. La source A est avantageusement constituée par une LED (diode électroluminescente) 4. La source A est orientée de telle sorte que la direction moyenne D de son faisceau lumineux soit oblique par rapport à l'axe X-X. Le faisceau lumineux émis par la source A entre dans l'élément 3 par la surface extérieure de la bosse 3b4 et subit une réflexion totale, vitreuse ou partielle sur la surface 3b1. Cette réflexion redresse le faisceau lumineux issu de la source A suivant des directions sensiblement parallèles à l'axe X-X. Le faisceau sort de l'élément 3 par la face plane 3a et donne le faisceau lumineux B correspondant à la deuxième fonction souhaitée.

Ce faisceau B est obtenu sans altération du réflecteur 1. La source auxiliaire A se trouve derrière la bande 3c4. Lorsque cette bande 3c4 est opaque, la source A n'est pas visible pour un observateur regardant le projecteur éteint.

Si la zone de la surface 3b1 sur laquelle tombe le faisceau provenant de la source auxiliaire A a été conçue pour envoyer la lumière provenant de la source 2 dans l'axe de la route, cette zone n'aura qu'une efficacité partielle (réflexion partielle) lorsqu'elle sera utilisée par le faisceau lumineux provenant de la source A. C'est le cas par exemple où le projecteur P assure, en première fonction, une fonction code ou éventuellement route.

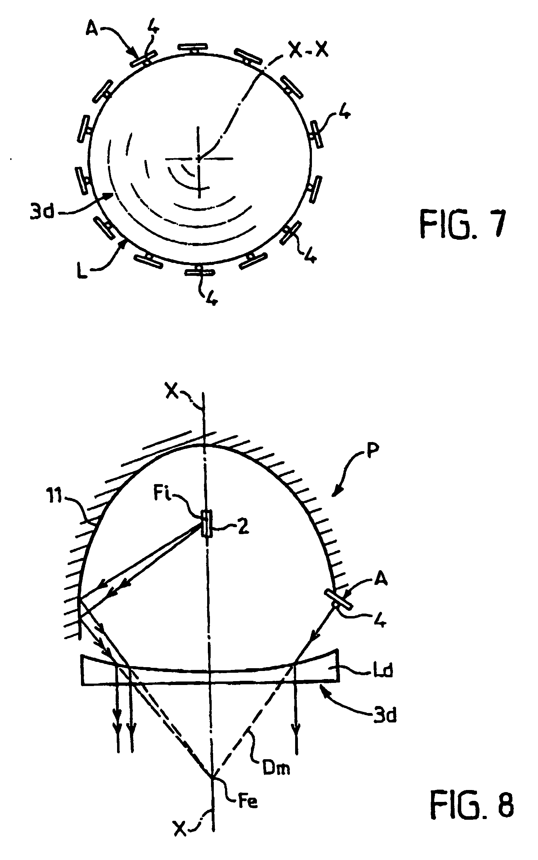

Si la zone de la surface 3b1 a été conçue pour envoyer de la lumière provenant de la source 2 sur les côtés du véhicule, l'efficacité de cette zone vis-à-vis du faisceau provenant de la source A sera améliorée. Une réflexion totale pourra se produire. C'est le cas où le projecteur P assure, en première fonction, une fonction antibrouillard ou FBL. La face de la lentille qui fonctionne ainsi en réflexion totale est donc utile/active vis-à-vis des rayons émis par la source A, mais elle est également utile/active vis-à-vis des rayons provenant de la source principale référencée 2 en figure 8. On a donc un profil d'élément de déviation qui travaille pour les rayons provenant des deux types de sources lumineuses.

Sur Figs.1 et 2, une seule source A, à savoir une seule LED 4 a été représentée. On peut bien entendu prévoir plusieurs LED 4 par exemple écartées et alignées verticalement, parallèlement aux génératrices de la surface 3b.

On peut également prévoir des LED 4 de chaque côté de l'élément 3 alors que sur Figs.1 et 2, une seule LED 4 est représentée du côté droit.

La deuxième fonction assurée par le projecteur P lorsque la ou les LED 4 sont allumées selon Figs.1 et 2 est essentiellement une fonction LV (lampe ville) correspondant à une intensité lumineuse relativement faible.

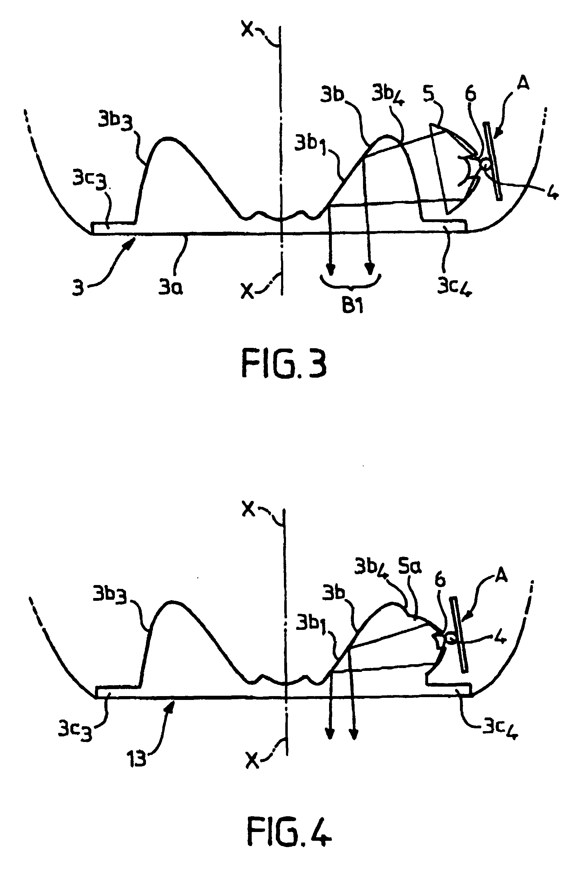

Fig.3 montre une variante de réalisation permettant de réaliser, en deuxième fonction, la fonction DRL dans de bonnes conditions. La LED 4 est couplée à un collimateur 5 formé par une lentille plan-convexe. La face convexe du collimateur 5 est tournée vers la LED 4 et comporte, à son sommet, une échancrure 6 dans laquelle rayonne la LED 4. Le collimateur 5 est prévu pour recueillir un maximum d'énergie lumineuse de la LED 4 et la diriger, sous forme d'un faisceau sensiblement parallèle, sur le flanc 3b4 de l'élément 3. Le faisceau est réfléchi sur la face d'entrée 3b1 qui joue essentiellement le rôle de redresseur de rayons lumineux sensiblement suivant l'axe optique X-X pour donner le faisceau de sortie B1.

En choisissant une LED 4 suffisamment puissante et en prévoyant éventuellement plusieurs LED 4 superposées parallèlement aux flancs de l'élément 3, on peut ainsi bien assurer une fonction DRL.

Selon Fig.3, le collimateur 5 est constitué par une pièce distincte de l'élément 3.

Selon Fig.4, le collimateur 5a fait partie intégrante de l'élément transparent de déviation optique 13, semblable par ailleurs à l'élément 3 des figures précédentes.

La LED 4 peut être encastrée dans l'échancrure 6 du collimateur.

Il est à noter que lorsque le collimateur 5a est intégré dans l'élément 13 de déviation optique ou dans la lentille L, par réalisation directe au niveau de la lentille de la forme permettant de collimater les rayons issus de la LED, une telle solution présente un fort intérêt dès lors qu'on utilise une source lumineuse créant de faibles problèmes thermiques. On peut alors se permettre d'utiliser une lentille en matière plastique dont les libertés de forme autorisent ce type de définition.

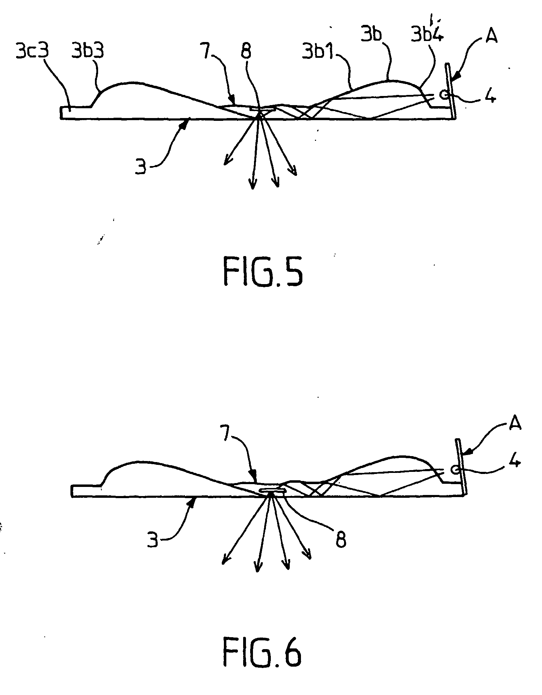

Fig.5 montre une variante de réalisation avec un élément transparent de déviation optique 23 du même type que sur Figs.1 à 4, mais qui constitue une lentille divergente ayant une distance focale relativement grande. La source lumineuse auxiliaire A formée par une LED 4 est disposée latéralement, comme sur Figs. 1 à 4. La longueur de la distance focale est telle qu'une fraction importante de la lumière issue de la source latérale A, notamment au moins le quart du flux lumineux, subit une réflexion totale et est guidée à l'intérieur de la lentille vers la zone centrale 7. Au moins un élément diffusant 8 est prévu dans cette zone 7 pour diffuser vers l'extérieur, notamment vers un observateur, la lumière guidée à l'intérieur de la lentille.

Chaque élément diffusant 8 peut se trouver soit sur la face d'entrée de la lentille comme sur Fig.5, soit dans la masse de la lentille comme sur Fig.6, soit en face de sortie. Chaque élément diffusant 8 est bien localisé et peut être constitué par une inclusion, comme exposé par exemple dans FR-A- 2 819 040, au nom de la même société demanderesse.

L'élément diffusant 8 sera doublement éclairé : d'une part avec la source principale 2 (Fig.2)associée au réflecteur du projecteur P, et d'autre part avec la ou les sources auxiliaires A, de type LED 4, situées en périphérie de la lentille divergente 23, qui peut être cylindrique.

On peut adapter la disposition latérale de la LED 4, orientée en oblique par rapport à l'axe optique X-X, à un élément transparent de déviation optique 3d comme montré sur Fig.7. L'élément 3d, selon Fig.7, est formé par une lentille divergente de révolution L qui a, par exemple, un profil de méridienne semblable à celui de la face arrière 3b des Figs.2-4. Une telle lentille divergente L, combinée avec un réflecteur approprié, peut assurer tout type de fonction d'éclairage. Le faisceau à former à l'infini doit être établi par le réflecteur à distance fini puis être imagé par la lentille divergente, sous réserve que celle-ci corrige les aberrations sphériques.

Dans ce cas, on peut entourer la lentille L avec une couronne de sources auxiliaires A ou LED 4 comme illustré sur Fig.7. Les LED 4 sont orientées de telle sorte que l'axe de leur faisceau lumineux soit dirigé radialement vers l'axe optique X-X. Un masque annulaire peut être prévu devant la couronne de LED 4 de sorte qu'un observateur regardant le projecteur ne verra pas les LED 4 cachées par ce masque.

Selon l'exemple de Fig.7, quatorze LED 4 sont disposées régulièrement à la périphérie de la lentille L.

Pour assurer une deuxième fonction de type LV ( lampe ville), les LED 4 sont utilisées seules.

Pour assurer une deuxième fonction de type DRL, les LED 4 sont de préférence couplées avec des collimateurs 5 ou 5a décrits à propos des Figs.3 et 4.

Fig.8 montre une variante de réalisation du projecteur P selon laquelle le réflecteur 11 est du type ellipsoïde. La source lumineuse 2 est disposée au voisinage d'un premier foyer Fi ou foyer interne de l'ellipsoïde. Le deuxième foyer Fe est situé hors du projecteur. L'élément 3d de déviation optique est constitué par une lentille divergente Ld de révolution, par exemple une lentille plan-concave, avec surface concave tournée vers la source 2.

La source auxiliaire A, toujours formée de préférence par une ou plusieurs LED 4 écartées transversalement de l'axe optique X-X, est orientée de telle sorte que la direction moyenne Dm de son faisceau lumineux soit dirigée vers le deuxième foyer Fe. La lentille L redresse le faisceau lumineux de la LED 4 sensiblement parallèlement à l'axe X-X.

Quelle que soit la réalisation adoptée, le projecteur P permet d'assurer une première fonction avec un réflecteur 1, 11 particulièrement adapté, et une deuxième fonction sans altération du réflecteur 1.

En particulier, pour la réalisation d'une deuxième fonction LV dans un projecteur code, le réflecteur du code, en dehors du trou nécessaire à la lampe de code, ne comporte aucun trou supplémentaire pour la fonction LV. L'addition de la source auxiliaire A, LED 4 est complètement transparente pour le code.

La réalisation est compacte, notamment lorsqu'une couronne de diodes illustrée sur Fig.7 est utilisée pour réaliser une fonction LV ou DRL. On utilise une seule et même plage éclairante pour plusieurs fonctions.

La deuxième fonction ajoutée, notamment lorsque l'on utilise des LED, ne provoque aucune augmentation sensible de volume du projecteur.

La solution proposée convient aussi bien pour un projecteur avant que pour un feu de signalisation arrière. En particulier pour les feux arrière de type ARS (« Advanced Rear System » ou « Système arrière avancé ») qui comprennent un allumage en deux temps, avec une augmentation de l'intensité lumineuse lorsque le freinage est brusque. La fonction supplémentaire, correspondant à l'augmentation d'intensité lumineuse, peut être assurée avec le dispositif de l'invention.

## Revendications

1. Projecteur de véhicule automobile comprenant un réflecteur (1, 11) prévu pour que son axe optique (X-X) soit orienté sensiblement suivant l'axe longitudinal du véhicule, une source lumineuse (2) située au voisinage d'un foyer du réflecteur, et un élément transparent de déviation optique (3, 3d) placé devant la source et le réflecteur, l'ensemble permettant de produire un faisceau lumineux correspondant à une première fonction, le projecteur comprenant en outre une source auxiliaire (A) écartée transversalement de l'axe optique du réflecteur et propre à assurer une deuxième fonction,la source auxiliaire (A) étant disposée en avant du réflecteur (1,11), au voisinage du contour de l'élément transparent de déviation optique (3,3d) et étant orientée vers l'axe optique du réflecteur, **caractérisé en ce que** l'élément transparent de déviation optique (3,3d) assure essentiellement un redressement du faisceau de la source auxiliaire (A) sensiblement suivant la direction de l'axe optique du réflecteur, ledit élément transparent de déviation optique (3) ayant un effet divergent et ayant la forme d'une lentille moins épaisse en son centre qu'en son bord, la source auxiliaire (A) et l'élément transparent de déviation optique (3) étant prévus et disposés de telle sorte qu'une partie au moins du faisceau lumineux de la source auxiliaire entre latéralement dans l'élément de déviation (3) pour subir une réflexion totale ou partielle sur la face arrière (3b1) de l'élément et être renvoyé (B) vers l'avant la face de l'élément transparent fonctionnant en réflexion totale ou partielle vis-à-vis des rayon émis par la source auxiliaire (A) étant également active vis-à-vis des rayons provenant de la source lumineuse (2).

2. Projecteur de véhicule automobile selon la revendication 1, **caractérisé en ce que** l'élément transparent de déviation optique (3,3d) présente une face plane (3a) et une autre face (3b) dont la partie centrale (3b1) est concave dans son ensemble, tournant sa cavité vers la source lumineuse (2).

3. Projecteur selon la revendication 2, **caractérisé en ce que** la partie centrale (3b1) de l'autre face de l'élément transparent de déviation optique, notamment sa face arrière (3b), présente dans son fond une ondulation (3b2) avec zones convexes.

4. Projecteur selon la revendication 2 ou 3, **caractérisé en ce que** la partie centrale (3b1) de l'autre face de l'élément transparent de déviation optique, notamment sa face arrière (3b), est délimitée de chaque côté par une bosse (3b3,3b4) tournant sa concavité vers la source lumineuse (2).

5. Projecteur selon la revendication 1, **caractérisé en ce que** l'élément transparent de déviation optique (3) est constitué par une lentille cylindrique à génératrices verticales, la source auxiliaire (A) étant disposée sur un flanc (3b4) de l'élément de déviation optique, le long de génératrices extérieures.

6. Projecteur selon la revendication précédente, **caractérisé en ce que** plusieurs sources auxiliaires (A) sont superposées, parallèlement aux génératrices de la lentille (3).

7. Projecteur selon l'une des revendications précédentes, **caractérisé en ce qu'**un collimateur (5, 5a) est associé à chaque source lumineuse auxiliaire (A).

8. Projecteur selon la revendication précédente, **caractérisé en ce que** le collimateur (5a) est intégré dans l'élément transparent de déviation optique (13, L).

9. Projecteur selon la revendication précédente, **caractérisé en ce que** l'élément transparent de déviation optique (13, L) avec collimateur (5a) intégré est réalisé en matière plastique.

10. Projecteur selon l'une des revendications précédentes, **caractérisé en ce que** l'élément transparent de déviation optique (23) constitue une lentille divergente de distance focale relativement grande, telle qu'une fraction importante de la lumière issue de la source latérale (A) subit une réflexion totale et est guidée à l'intérieur de la lentille (23), et au moins un élément diffusant (8) est prévu dans une zone centrale (7) de la lentille pour diffuser vers l'extérieur, notamment vers un observateur, la lumière guidée à l'intérieur.

11. Projecteur selon la revendication précédente, **caractérisé en ce que** l'élément diffusant (8) est prévu à l'un des emplacements suivants : face d'entrée, face de sortie, ou dans la masse de la lentille.

12. Projecteur selon la revendication 1, **caractérisé en ce que** l'élément transparent de déviation optique (3d) est de révolution autour d'un axe géométrique et que plusieurs sources lumineuses auxiliaires (4) sont disposées en couronne autour de l'élément optique et dirigées de telle sorte que le faisceau de chaque source lumineuse soit orienté radialement vers l'axe optique (X-X) du réflecteur.

13. Projecteur selon l'une des revendications précédentes, **caractérisé en ce que** le réflecteur (1) présente une génératrice verticale parabolique et de préférence une génératrice horizontale de type elliptique.

14. Projecteur selon l'une des revendications 1 à 12, **caractérisé en ce que** le réflecteur (11) est du type elliptique et la source lumineuse est disposée au voisinage d'un premier foyer (Fi) interne du réflecteur, tandis que le deuxième foyer (Fe) est situé à l'extérieur du réflecteur, une lentille divergente (Ld) est disposée entre le réflecteur (11) et le deuxième foyer (Fe) pour transformer le faisceau réfléchi issu de la première source lumineuse en un faisceau sensiblement parallèle, et la source auxiliaire (A, 4) est située derrière la lentille (Ld) et est orientée de telle sorte que son faisceau lumineux soit dirigé sensiblement vers le deuxième foyer (Fe)du réflecteur.

15. Projecteur selon l'une des revendications précédentes, **caractérisé en ce que** ce projecteur est prévu pour assurer comme première fonction une fonction antibrouillard ou FBL et, comme deuxième fonction, une fonction LV ou DRL.

16. Projecteur selon l'une des revendications précédentes, **caractérisé en ce que** la ou les sources auxiliaires (A, 4) sont disposées derrière un masque.

17. Projecteur selon l'une des revendications précédentes, **caractérisé en ce que** chaque source auxiliaire (A) est constituée par une diode électroluminescente (4).

## Claims

1. Motor vehicle headlight comprising a reflector (1, 11) which is designed such that its optical axis (X-X) is oriented substantially according to the longitudinal axis of the vehicle, a source of light (2) which is situated in the vicinity of a focal point of the reflector, and a transparent optical deflection element (3, 3d) which is placed in front of the source and the reflector, the assembly making it possible to produce a light beam corresponding to a first function, the headlight additionally comprising an auxiliary source (A) which is spaced transversely from the optical axis of the reflector, and can assure a second function, the auxiliary source (A) being disposed to the front of the reflector (1, 11) in the vicinity of the contour of the transparent optical deflection element (3, 3d), and being oriented towards the optical axis of the reflector, **characterised in that** the transparent optical deflection element (3, 3d) essentially redresses the beam of the of the auxiliary source (A) substantially according to the direction of the optical axis of the reflector, the said transparent optical deflection element (3) having a diverging effect and being in the form of a lens which is thinner at its centre than at its edge, the auxiliary source (A) and the transparent optical deflection element (3) being designed and disposed such that at least part of the light beam of the auxiliary source enters laterally in the deflection element (3) in order to undergo total or partial reflection on the rear surface (3b1) of the element, and be returned (B) forwards, the surface of the transparent element which functions in total or partial reflection in relation to the rays emitted by the auxiliary source (A) also being active in relation to the rays obtained from the source of light (2).

2. Motor vehicle headlight according to claim 1, **characterised in that** the transparent optical deflection element (3, 3d) has a flat surface (3a), and another surface (3b), the central part (3b1) of which is concave as a whole, and the cavity of which faces the source of light (2).

3. Headlight according to claim 2, **characterised in that** the central part (3b1) of the other surface of the transparent optical deflection element, and in particular its rear surface (3b), has in its base an undulation (3b2) with convex areas.

4. Headlight according to claim 2 or 3, **characterised in that** the central part (3b1) of the other surface of the transparent optical deflection element, and in particular its rear surface (3b), is delimited on each side by a boss (3b3, 3b4), the concavity of which faces the source of light (2).

5. Headlight according to claim 1, **characterised in that** the transparent optical deflection element (3) is constituted by a cylindrical lens with vertical generatrices, the auxiliary source (A) being disposed on a flank (3b4) of the optical deflection element, along exterior generatrices.

6. Headlight according to the preceding claim, **characterised in that** a plurality of auxiliary sources (A) are superimposed, parallel to the generatrices of the lens (3).

7. Headlight according to one of the preceding claims, **characterised in that** a collimator (5, 5a) is associated with each auxiliary source of light (A).

8. Headlight according to the preceding claim, **characterised in that** the collimator (5a) is integrated in the transparent optical deflection element (13, L).

9. Headlight according to the preceding claim, **characterised in that** the transparent optical deflection element (13, L) with an integrated collimator (5a) is made of plastic material.

10. Headlight according to one of the preceding claims, **characterised in that** the transparent optical deflection element (23) constitutes a divergent lens with a relatively great focal distance, such that a substantial fraction of the light obtained from the lateral source (A) undergoes total reflection and is guided inside the lens (23), and at least one diffusing element (8) is provided in a central area (7) of the lens in order to diffuse the light which is guided in the interior towards the exterior, and in particular towards an observer.

11. Headlight according to the preceding claim, **characterised in that** the diffusing element (8) is provided in one of the following locations: intake surface, output surface, or in the mass of the lens.

12. Headlight according to claim 1, **characterised in that** the transparent optical deflection element (3d) is generated by revolution around a geometric axis, and **in that** a plurality of auxiliary sources of light (4) are disposed in a ring around the optical element, and are faced such that the beam of each source of light is oriented radially towards the optical axis (X-X) of the reflector.

13. Headlight according to one of the preceding claims, **characterised in that** the reflector (1) has a parabolic vertical generatrix, and preferably a horizontal generatrix of an elliptical type.

14. Headlight according to one of claims 1 to 12, **characterised in that** the reflector (11) is of the elliptical type, and the source of light is disposed in the vicinity of a first focal point (Fi) inside the reflector, whereas the second focal point (Fe) is situated on the exterior of the reflector, a divergent lens (Ld) is disposed between the reflector (11) and the second focal point (Fe), in order to transform the reflected beam which is obtained from the first source of light into a substantially parallel beam, and the auxiliary source (A, 4) is situated behind the lens (Ld) and is oriented such that its light beam faces substantially towards the second focal point (Fe) of the reflector.

15. Headlight according to one of the preceding claims, **characterised in that** the headlight is designed to assure as a primary function an anti-fog function (FBL), and as a secondary function a town lamp (LV) or daylight running lamp (DRL) function.

16. Headlight according to one of the preceding claims, **characterised in that** the auxiliary source(s) (A, 4) is/are disposed behind a mask.

17. Headlight according to one of the preceding claims, **characterised in that** each auxiliary source (A) is constituted by an electro-luminescent diode (4).

## Patentansprüche

1. Kraftfahrzeugscheinwerfer mit einem Reflektor (1, 11), der dazu vorgesehen ist, dass seine optische Achse (X-X) im Wesentlichen längs zur Fahrzeuglängsachse ausgerichtet ist, einer in der Nähe eines Brennpunkts des Reflektors gelegenen Lichtquelle (2) und einem vor der Lichtquelle und dem Reflektor angeordneten lichtdurchlässigen optischen Ablenkungselement (3, 3d), wobei die Einheit ein Lichtbündel zu erzeugen erlaubt, das einer ersten Funktion entspricht, wobei der Scheinwerfer ferner eine Zusatzlichtquelle (A) aufweist, die in Querrichtung von der optischen Achse des Reflektors beabstandet ist und eine zweite Funktion zu gewährleisten vermag, wobei die Zusatzlichtquelle (A) vor dem Reflektor (1, 11) in der Nähe des Rands des lichtdurchlässigen optischen Ablenkungselements (3, 3d) angeordnet und zur optischen Achse des Reflektors ausgerichtet ist,
**dadurch gekennzeichnet, dass** das lichtdurchlässige optische Ablenkungselement (3, 3d) überwiegend eine Ausrichtung des Lichtbündels der zusätzlichen Lichtquelle (A) im Wesentlichen in Richtung der optischen Achse des Reflektors sicherstellt, wobei das lichtdurchlässige optische Ablenkungselement (3) eine streuende Wirkung hat und die Form einer Linse aufweist, deren Dicke in der Mitte geringer ist als an ihrem Rand, wobei die Zusatzlichtquelle (A) und das lichtdurchlässige optische Ablenkungselement (3) dazu vorgesehen und solchermaßen angeordnet sind, dass wenigstens ein Teil des Lichtbündels der zusätzlichen Lichtquelle seitlich in das Ablenkungselement (3) eintritt, um auf der Rückseite (3b1) des Elements einer Total- oder Teilreflexion zu unterliegen und nach vorne zurückgestrahlt (B) zu werden, wobei die hinsichtlich den von der zusätzlichen Lichtquelle (A) ausgesandten Strahlen in Total- oder Teilreflexion funktionierende Seite des lichtdurchlässigen Elements auch hinsichtlich der von der Lichtquelle (2) stammenden Strahlen wirksam ist.

2. Kraftfahrzeugscheinwerfer nach Anspruch 1,
**dadurch gekennzeichnet, dass** das lichtdurchlässige optische Ablenkungselement (3, 3d) eine ebene Seite (3a) und eine andere Seite (3b) aufweist, deren mittlerer Teil (3b1) insgesamt konkav ist, wobei die Konkavität der Lichtquelle (2) zugewandt ist.

3. Scheinwerfer nach Anspruch 2,
**dadurch gekennzeichnet, dass** der mittlere Teil (3b1) der anderen Seite des lichtdurchlässigen optischen Ablenkungselements, insbesondere seiner Rückseite (3b), in seinem Boden eine Wellung (3b2) mit konvexen Bereichen aufweist.

4. Scheinwerfer nach Anspruch 2 oder 3,
**dadurch gekennzeichnet, dass** der mittlere Teil (3b1) der anderen Seite des lichtdurchlässigen optischen Ablenkungselements, insbesondere seiner Rückseite (3b), auf jeder Seite von einem Höcker (3b3, 3b4) begrenzt ist, wobei die Konkavität der Lichtquelle (2) zugewandt ist.

5. Scheinwerfer nach Anspruch 1,
**dadurch gekennzeichnet, dass** das lichtdurchlässige optische Ablenkungselement (3) von einer zylindrischen Linse mit vertikalen Erzeugenden gebildet ist, wobei die Zusatzlichtquelle (A) auf einer Flanke (3b4) des optischen Ablenkungselements entlang der äußeren Erzeugenden angeordnet ist.

6. Scheinwerfer nach dem vorhergehenden Anspruch,
**dadurch gekennzeichnet, dass** mehrere Zusatzlichtquellen (A) parallel zu den Erzeugendenden der Linse (3) übereinanderliegend angeordnet sind.

7. Scheinwerfer nach einem der vorhergehenden Ansprüche,
**dadurch gekennzeichnet, dass** jeder zusätzlichen Lichtquelle (A) ein Kollimator (5, 5a) zugeordnet ist.

8. Scheinwerfer nach dem vorhergehenden Anspruch,
**dadurch gekennzeichnet, dass** der Kollimator (5a) in das lichtdurchlässige optische Ablenkungselement (13, L) integriert ist.

9. Scheinwerfer nach dem vorhergehenden Anspruch,
**dadurch gekennzeichnet, dass** das lichtdurchlässige optische Ablenkungselement (13, L) mit integriertem Kollimator (5a) aus Kunststoff besteht.

10. Scheinwerfer nach einem der vorhergehenden Ansprüche,
**dadurch gekennzeichnet, dass** das lichtdurchlässige optische Ablenkungselement (3) eine Streulinse mit relativ großer Brennweite bildet, so dass ein beträchtlicher Anteil des von der seitlichen Lichtquelle (A) abgegebenen Lichts einer Totalreflexion unterliegt und in das Innere der Linse (3) gelenkt wird, und wenigstens ein Streuelement (8) in einem mittleren Bereich (7) der Linse vorgesehen ist, um das nach innen gelenkte Licht nach außen, insbesondere in Richtung eines Betrachters zu streuen.

11. Scheinwerfer nach dem vorhergehenden Anspruch,
**dadurch gekennzeichnet, dass** das Streuelement (8) an einer der folgenden Stellen vorgesehen ist: Eintrittsseite, Austrittsseite oder in der Linsenmasse.

12. Scheinwerfer nach Anspruch 1,
**dadurch gekennzeichnet, dass** das lichtdurchlässige optische Ablenkungselement (3d) rotationssymmetrisch um eine geometrische Achse herum angeordnet ist und mehrere Zusatzlichtquellen (4) ringförmig um das optische Element angeordnet und so ausgerichtet sind, dass das Lichtbündel jeder Lichtquelle radial zur optischen Achse (X-X) des Reflektors ausgerichtet ist.

13. Scheinwerfer nach einem der vorhergehenden Ansprüche,
**dadurch gekennzeichnet, dass** der Reflektor (1) eine parabolische vertikale Erzeugende und vorzugsweise eine elliptische horizontale Erzeugende aufweist.

14. Scheinwerfer nach einem der Ansprüche 1 bis 12,
**dadurch gekennzeichnet, dass** der Reflektor (11) vom ellipsoiden Typ ist und die Lichtquelle in der Nähe eines ersten inneren Brennpunkts (Fi) des Reflektors angeordnet ist, während der zweite Brennpunkt (Fe) außerhalb des Reflektors liegt, eine Streulinse (Ld) zwischen dem Reflektor (11) und dem zweiten Brennpunkt (Fe) angeordnet ist, um das von der ersten Lichtquelle abgegebene reflektierte Lichtbündel in ein im Wesentlichen paralleles Lichtbündel umzuwandeln, und die Zusatzlichtquelle (A, 4) hinter der Linse (Ld) liegt und solchermaßen ausgerichtet ist, dass ihr Lichtbündel im Wesentlichen zum zweiten Brennpunkt (Fe) des Reflektors gelenkt wird.

15. Scheinwerfer nach einem der vorhergehenden Ansprüche,
**dadurch gekennzeichnet, dass** der Scheinwerfer dazu vorgesehen ist, als erste Funktion eine Nebellicht- oder statische Kurvenlicht-Funktion und als zweite Funktion eine Standlicht- oder Tagfahrlicht-Funktion auszuführen.

16. Scheinwerfer nach einem der vorhergehenden Ansprüche,
**dadurch gekennzeichnet, dass** die zusätzliche(n) Lichtquelle(n) (A, 4) hinter einer Blende angeordnet sind.

17. Scheinwerfer nach einem der vorhergehenden Ansprüche,
**dadurch gekennzeichnet, dass** jede Zusatzlichtquelle (A) von einer Leuchtdiode (4) gebildet ist.
